# EUROPÄISCHE PATENTANMELDUNG

(11) **EP 0 525 431 A1**
(43) Veröffentlichungstag der Anmeldung: **03.02.1993**
(21) Anmeldenummer: 92111220.7
(22) Anmeldetag: 02.07.1992
(51) Int. Cl.: A01D 45/06, A01D 43/00

(54) **Erntemethode für Flachspflanzen**

(30) Priorität: 25.07.1991 DE 4124752
(71) Anmelder: Linde Aktiengesellschaft, D-65189 Wiesbaden (DE)
(72) Erfinder: Schumacher, Klaus, Dipl.-Ing., W-5110 Alsdorf (DE)
(74) Vertreter: Schaefer, Gerhard, Dr.

(57) **Zusammenfassung**

Es handelt sich um eine Erntemethode für Flachspflanzen mit Verödungsschritt und Trocknungsphase, wobei als Verödungsschritt eine (oder mehrere) Brennerflamme (4)(n) knapp oberhalb des Erdbodens mit horizontaler Ausrichtung durch den stehenden Flachsbestand geführt wird, und im Anschluß daran die Trocknungsphase erfolgt. Zur Verbesserung der erfolgenden Flammbehandlung des Flachses und insbesondere der dazu dienenden Flamme (n) wird vorgeschlagen, daß benachbart zur Flamme(n) und etwa parallel gerichtet ein nicht turbulenter Gasstrom (3) oder -ströme, vorzugsweise aus Luft, zugeführt wird bzw.werden. Man erhält so eine weniger divergierende, weiterreichende, besser wirksame Flamme mit zugehörigem Heißgasstrom.

## Beschreibung

Die Erfindung betrifft eine Erntemethode für Flachspflanzen mit Verödungsschritt und Trocknungsphase, wobei als Verödungsschritt eine (oder mehrere) Brennerflamme (n) knapp oberhalb des Erdbodens mit horizontaler Ausrichtung durch den stehenden Flachsbestand geführt wird und im Anschluß daran die Trocknungsphase erfolgt.

Zur Aberntung eines Flachsbestandes werden in althergebrachter Weise die Flachspflanzen noch in grünem Zustand aus dem Boden gerissen (gerauft) und bleiben zur Trocknung auf dem Akkerboden liegen. Dieser Trocknungsprozeß dauert einige Wochen und während dieser Zeit entstehen witterungsbedingte Schäden an den Flachspflanzen und deren Fasern. Der Trocknungsprozeß beansprucht zum großen Teil deshalb einen mehrwöchigen Zeitraum, weil der Nahrungszufluß zur Pflanze durch den direkten Bodenkontakt und die intakten Wurzeln - trotz des Raufens - nicht vollständig unterbrochen ist. Ein neuerer Lösungsvorschlag zur Vermeidung dieser negativen Umstände besteht darin, den gesamten Flachsbestand zur Abtötung oder Verödung knapp oberhalb des Erdbodens mit einer Brennerflamme zu beaufschlagen oder zu behandeln. Durch diese Hitzebeaufschlagung der Planze wird der Nahrungstransport in der stehenbleibenden Planze sofort unterbunden, und es ist in der Folge nur eine verkürzte Trocknungsphase notwendig. Diese flächenüberstreichende Behandlung der Flachspflanzen mit einer oder auch mehreren, aufeinander folgenden oder auch gegeneinander gerichteten Flammen bereitet jedoch Probleme, da dazu möglichst weitreichende, nicht zu stark divergierende oder zur Zerstreuung neigende Flammen notwendig sind.

Die Aufgabenstellung vorliegender Erfindung besteht daher darin, Maßnahmen anzugeben, die eine eng begrenzte, nicht stark divergierende, möglichst weitreichende "Ernte"-Flamme mit zughörigem Heißgasstrom ergeben.

Diese Aufgabe wird gemäß der Erfindung dadurch gelöst, daß benachbart zur Flamme(n) und etwa parallel gerichtet ein nicht turbulenter Gasstrom oder -ströme, vorzugsweise aus Luft, zugeführt wird bzw.werden.

Durch den benachbart zur Flamme oder den Flammen zugeführten Gasstrom, wobei dies auch auf mehreren Seiten einer Flamme erfolgen kann, wird die jeweilige Flamme in ihrer Ausbreitung und Ausdehnung beeinflußt. Sie erfährt eine Begrenzung und Bündelung, teilweise sogar eine Beschleunigung und Lenkung ihrer Flammgase. Ausgangspunkt für die Probleme bei der Flammbehandlung von Flachspflanzen ist einerseits die normale Ausdehntendenz von Flammen und andererseits die Zerstreuungswirkung, die von den im Flammenweg stehenden Flachspflanzen ausgeht. Aufgrund dieser Ursachen verliert die Flamme in der vorbekannten Verfahrenweise vergleichsweise früh nach Verlassen des Brennerkopfs ihre enge Bündelung und somit auch die gewünschte Wirkung, nämlich durch die Hitzebeaufschlagung eine Verödung der Flachspflanzen zu bewirken. Dieses Ziel wird mit dem erfindungsgemäßen Vorschlag erheblich verbessert erreicht. Wird beispielsweise ein Luftstrom etwa parallel zur Flamme und diese streifend mit größerer aber nicht turbulenter Strömungsgeschwindigkeit zugeführt, so breitet sich die Flamme nicht mehr in diese Richtung über den Luftstrom hinaus aus. Die Flamme ist also durch den benachbarten, berührenden Luftstrom begrenzt und zudem in ihrer Ausbreitung stabilisiert. Gebenenfalls durch mehrere Gasströme oder auch durch entprechend geformte Gassstromschleier können besonders eng begrenzte, weit reichende Flammen erreicht werden.

Besonders vorteilhaft ist es, wenn der Zusatz-Gasstrom oberhalb der Flamme und etwa parallel und gleichgerichtet zugeführt wird. Einerseits wird damit insbesondere auch dem Auftrieb, dem heiße Gasströme unterliegen, entgegengewirkt. Andererseits ist es gerade zur Aberntung von Flachs nach dem Flammprinzip erwünscht, daß eine gleichbleibend bodennahe Flamme mit zugehörigem Heißgasstrom möglichst weitreichend aufrecherhalten wird. Beide Ziele lassen durch besagte, vorteilhafte Gaszuführung oberhalb der Flamme erreichen. Besonders vorteilhaft ist unter Umständen eine geringfügig nach unten geneigte Gaszuführung oberhalb der Flamme, da dann die Flamme und zugehöriger Heißgasstrom noch besser in Bodennähe gehalten.

Weitere Vorteile werden zudem erreicht, wenn der Gasstrom mit höherer Geschwindigkeit, als sie die Flammengase aufweisen, zugeführt wird. Auf diese Weise tritt ein zuätzlicher Beschleunigungseffekt für die Verbrennungsgase der Flamme auf, aufgrund dessen deren Reichweite erhöht wird.

Mit Vorteil wird manchmal ein seitlich der Flamme angeordneter Parallel-Gasstrom zusätzlich oder allein vorgesehen. Auch ein seitlich angeordneter, etwa parallel ausgerichteter Gasstrom allein bringt bereits Vorteile hinsichtlich Beschleunigung und Lenkung der Flamme bzw. der Flammgase.

Eine besonders vorteilhafte Ausgestaltung der Erfindung ist dadurch gekennzeichnet, daß die Flamme und/oder der benachbart zugeführte Gasstrom so eingestellt werden, daß im Leerlaufbetrieb im Abstand von ca. 1 m vom Brennerkopf Heißgasströmungsgeschwindigkeiten von mehr als 3 m/s, vorzugsweise > 4 m/s, mit Temperaturen von mehr als 120^{*}C, vorzugsweise > 150^{*}C, erreicht werden.

Weiters wird mit Vorteil eine Acetylen-Druckluft-Flamme zur Verfahrendurchführung angewendet. Acetylen weist aufgrund seiner schnellen Zündgeschindigkeit nur eine kurze Flamme und zudem hohe Flammtemperatur auf, weshalb damit ein besonders weitreichender, günstiger Heißgasstrahl erreichbar ist.

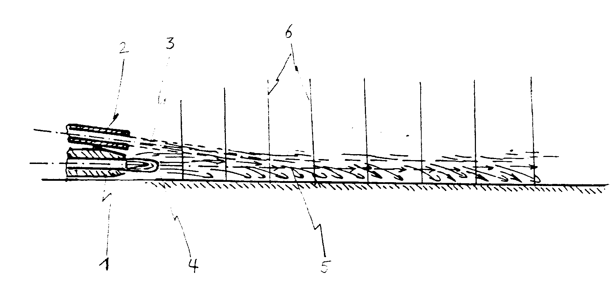

Anhand der Figur soll die Erfindung an einem Beispiel näher erläutert werden.

Die Figur zeigt einen im Ernteeinsatz befindlichen Brennerkopf 1 sowie eine unmittelbar benachbart angeordnete, etwa parallel ausgerichtete, die Auslaßöffnung auf gleicher Höhe aufweisende Zufuhrdüse 2 für einen Gasstrom 3. An den Brennerkopf 1 anschließend ist die Brennerflamme 4 (Primärflamme) mit zugehörigem Heißgasstrom 5 angedeutet. Die Linien 6 sollen Flachspflanzen symbolisieren.

Figurgemäß wird über die unmittelbar oberhalb des Brennerkopfes oder Brennerdüse 1 liegende Zufuhrdüse 2 ein Luftstrom mit einer nur sehr geringfügig nach unten zeigenden Neigung von 1 bis 3 Grad zur Horizontalen zugeführt.Günstige Gastromzuführungen liegen allgemein im Abstandsbereich von wenigen cm bis zu 20 cm bezüglich des Abstandes zwischen Brennerkopf und Zufuhrdüse, wobei Schrägstellungen bis zu 15 Grad mit Vorteil zur Anwendung kommen können.

Im Beispiel wird die Flamme mit Acetylen und Druckluft, welche vorgemischt werden, gebildet, wobei die Acetylenversorgung über mitzuführende Acetylengasflaschen oder ein Bündel von Flaschen erfolgt. Die Druckluft wird mit einem Kompressor erzeugt, wobei wenigstens etwa 6 bar bereitzustellen sind. Für die Durchführung der Flachserntung bzw. -behandlung wird am Brennerkopf 1 eine etwa stöchiometrische Flamme bevorzugt mit höheren Strömungsgeschwindigkeiten eingestellt, wobei andererseits jedoch auch auf einen nicht zu expansiven Brenngasverbrauch zu achten ist (wesentlicher Kostenfaktor). Für die hier im Bild gezeigte Anordnung mit einer Brennerdüse mit einem zentralen Gaskanal - Durchmesser ca. 1.5 mm - werden z.B. Acetylen mit 1.5 bar und Luft mit einer Druckeinstellung von 4,5 bar in einem Injektor vorgemischt und dann der Brennerdüse 1 zugeführt. Im Abstand von nur wenigen cm wird oberhalb dazu der Luftstrom 3 über die Zufuhrdüse 2 mit geringfügiger Schrägstellung und mit einem Druck von 4.5 bis 6 bar und ohne Turbulenzen zu erzeugen zugeführt. Die Zufuhrdüse weist hierzu einen Durchmesser von ca.2 mm - 0,5 bis 5 mm sind geeignet - auf. Die genannten Einstellungen sind vorteilhafte Verfahrensparameter, mit denen sich die im Anspruch 6 beschriebenen Verhältnisse erzeugen lassen. Mit den erfindungsgemäß vorgeschlagenen Maßnahmen wird insgesamt eine Perfektionierung der Flachsernte nach dem Flammprinzip erreicht.

## Patentansprüche

1. Erntemethode für Flachspflanzen mit Verödungsschritt und Trocknungsphase, wobei als Verödungsschritt eine (oder mehrere) Brennerflamme (n) knapp oberhalb des Erdbodens mit horizontaler Ausrichtung durch den stehenden Flachsbestand geführt wird, und im Anschluß daran die Trocknungsphase erfolgt, dadurch gekennzeichnet, daß benachbart zur Flamme(n) und etwa parallel gerichtet ein nicht turbulenter Gasstrom oder -ströme, vorzugsweise aus Luft, zugeführt wird bzw.werden.

2. Erntemethode nach Anspruch 1, dadurch gekennzeichnet, daß der Gasstrom oberhalb der Flamme zugeführt wird.

3. Erntemethode nach einem der Ansprüche 1 bis 2, dadurch gekennzeichnet, daß der Gasstrom oberhalb der Flamme mit einer geringfügig nach unten gerichteten Neigung zugeführt wird.

4. Erntemethode nach einem der Ansprüche 1 bis 3, dadurch gekennzeichnet, daß der Gasstrom mit höherer Geschwindigkeit, als sie die Flammengase sie aufweisen, zugeführt wird.

5. Erntemethode nach einem der Ansprüche 1 bis 4, dadurch gekennzeichnet, daß ein Gasstrom (e) seitlich der Flamme erzeugt wird.

6. Erntemethode nach einem der Ansprüche 1 bis 5, dadurch gekennzeichnet, daß die Flamme und/oder der Gasstrom so eingestellt werden, daß im Abstand von ca. 1 m vom Brennerkopf im Leerlaufbetrieb Heißgasströmungsgeschwindigkeiten von mehr als 3m/s, vorzugsweise > 4 m/s, mit Temperaturen von mehr als 120^{*}C, vorzugsweise > 150^{*}C, erreicht werden.

7. Erntemethode nach einem der Ansprüche 1 bis 6, dadurch gekennzeichnet, daß als Flammme eine Acetylen-Druckluft-Flamme angewendet wird.
